## Europäisches Patentamt

(19) **European Patent Office**

**Office européen des brevets**

(11) Publication number: **0 118 181**
**B1**

(12) **EUROPEAN PATENT SPECIFICATION**

(45) Date of publication of patent specification: **20.05.87**

(21) Application number: **84300436.7**

(22) Date of filing: **25.01.84**

(51) Int. Cl.⁴: **F 02 K 1/56, F 02 K 1/36**

(54) **Device for increasing and deflecting thrust of jet-propulsion engine of V/STOL aircraft.**

(30) Priority: **31.01.83 JP 14441/83**

(43) Date of publication of application:
**12.09.84 Bulletin 84/37**

(45) Publication of the grant of the patent:
**20.05.87 Bulletin 87/21**

(84) Designated Contracting States:
**DE FR GB IT SE**

(56) References cited:
**DE-A-1 927 573**
**DE-B-1 119 126**
**GB-A-1 550 633**
**US-A-3 380 660**

(73) Proprietor: **FUJI JUKOGYO KABUSHIKI KAISHA**
**7-2 Nishi Shinjuku 1-chome Shinjuku-ku**
**Tokyo (JP)**

(72) Inventor: **Horinouchi, Shigeru**
**899-7, Yasutsuka Mibu-Machi**
**Shimotsuga-Gun Tochigi-Ken (JP)**
Inventor: **Tanaka, Atsushi**
**2-2-21, Yamato**
**Utsunomiya-Shi Tochigi-Ken (JP)**

(74) Representative: **Abbie, Andrew Kenneth et al**
**A.A. THORNTON & CO. Northumberland House**
**303/306 High Holborn**
**London, WC1V 7LE (GB)**

The file contains technical information
submitted after the application was filed and
not included in this specification

Courier Press, Leamington Spa, England.

## Description

This invention relates to devices for increasing and deflecting the thrust of a jet-propulsion engine of vertical or short takeoff and landing (hereinafter referred to as V/STOL) aircraft. More particularly, the invention concerns a thrust increasing and deflecting device for V/STOL aircraft, which device is capable of increasing and, moreover, deflecting the thrust at takeoff or landing of a jet-propulsion engine of a V/STOL aircraft by utilizing the jet reaction.

In general, a V/STOL aircraft is known to possess the double capacity of performing as a VTOL aircraft making possible vertical takeoff and landing and also as a STOL aircraft making possible takeoff and landing with short runway distances. For this purpose, a V/STOL aircraft is provided with means for changing the direction of the engine thrust during the transition flight from takeoff to forward or cruising flight and from forward flight to landing. In a V/STOL aircraft of this character in which the engine thrust used for cruising is utilized as lift force also in takeoff and landing in this manner, a mechanism for deflecting this thrust direction becomes necessary.

In a common conventional thrust deflecting device, a deflector comprising a plurality of panels which can be positionally adjusted is installed to the rear of a jet-propulsion engine and is capable of deflecting the jet flow discharged from the engine to a substantially perpendicularly downward direction.

In a known thrust deflecting device of this character, a loss in the thrust occurs when the jet flow is deflected and gives rise to a drop in the takeoff and landing performance. Furthermore, since the wall inner surface of the deflector is exposed to a jet flow at a high temperature, the panels of the deflector must be constructed of expensive heat-resistant material. Still another problem in the conventional thrust deflecting device has been that, in some instances, the installation of a cooling system has been necessary, which has increased the production cost as well as the weight.

GB—A—1550633 cited in the examination of this application discloses a gas turbine engine for a V/STOL aircraft which is provided with a cooling system which utilises air from the engine fan as a coolant and comprises three subsystems for cooling (i) fixed side walls of the exhaust nozzle, (ii) a movable deflector which is used to deflect the exhaust gases downwardly, and (iii) an expansion flap for exhaust stream expansion control and flight manoeuvre vectoring.

US—A—3380660 and DE—A—1927573 also cited in the examination of this application each disclose a jet-propulsion engine for a vertical/short takeoff and landing (V/STOL) aircraft, said engine having an exhaust gas passage, and, combined therewith, a thrust increasing and deflecting device comprising: structures for forming secondary air induction passage means for communicatively connecting the outside atmosphere to the upstream end of said exhaust gas passage thereby to induct outside air as secondary air, by ejector action of said exhaust gas, into said exhaust gas passage to be mixed with said exhaust gas; flap gates operable to selectively close and open said air induction passage means; and a deflector provided at the outlet part of said exhaust gas passage and defining therein a flow path, said deflector being changeable in state between a non-deflecting state and a deflecting state to selectively vary the final direction of discharge of the exhaust gas, respectively, between an undeflected direction substantially parallel to the engine axis for forward flight and a deflected direction substantially perpendicularly downward relative to said engine axis for V/STOL takeoff or landing.

By inducting outside air by ejector action of the exhaust gas into the exhaust gas passage to be mixed with the exhaust gas when the deflector is in its deflecting state the thrust is increased and additionally the exhaust gas is cooled by being mixed with outside air thus reducing heating of the deflector.

The present invention provides a jet-propulsion engine for a vertical/short takeoff and landing (V/STOL) aircraft, said engine having an exhaust gas passage, and, combined therewith, a thrust increasing and deflecting device comprising: structures for forming secondary air induction passage means for communicatively connecting the outside atmosphere to the upstream end of said exhaust gas passage thereby to induct outside air as secondary air, by ejector action of said exhaust gas, into said exhaust gas passage to be mixed with said exhaust gas; flap gates operable to selectively close and open said air induction passage means; and a deflector provided at the outlet part of said exhaust gas passage and defining therein a flow path, said deflector being changeable in state between a non-deflecting state and a deflecting state to selectively vary the final direction of discharge of the exhaust gas, respectively, between an undeflected direction substantially parallel to the engine axis for forward flight and a deflected direction substantially perpendicularly downward relative to said engine axis for V/STOL takeoff or landing: characterised by said flap gates being provided at the inlet ends of said air inducting passage means and by a guide vane device having guide vanes which are movable between (i) a first condition extending in and along a central zone of the flow path defined by the deflector, when the deflector is in said deflecting state, for preventing separation of flow at the inner side of the deflected flow path, and (ii) a second, folded condition forming a part of the flow path when the deflector is in said non-deflecting state.

By preventing the separation of flow at the inner side of the deflected flow path the guide vane device minimizes thrust loss due to such separation.

In order that the invention may be better understood, an embodiment thereof, which is given by way of example only, will now be described, with reference to the accompanying drawings, in which:

Figure 1 is a longitudinal section of a jet-propulsion engine for a V/STOL aircraft in a state for vertical takeoff or landing;

Figure 2 is a relatively enlarged side elevation showing a guide vane device of the engine;

Figure 3 is a longitudinal section of the engine in a state for cruising flight;

Figure 4 is a graph indicating the results of experiments on increasing thrust according to the invention; and

Figure 5 is a simplified longitudinal section showing a conventional thrust deflecting device of a turbine engine.

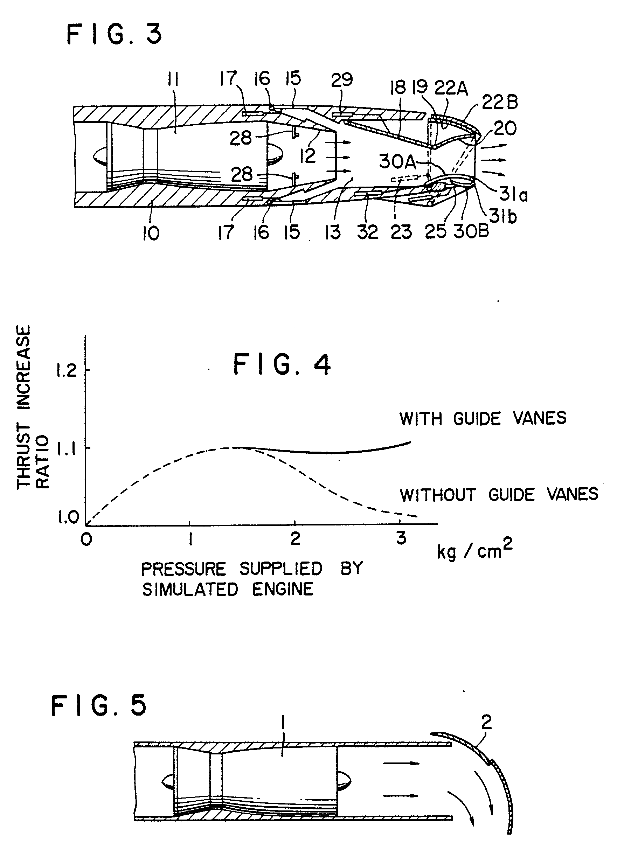

A typical example of the conventional thrust deflecting device described hereinbefore is illustrated in Figure 5. The turbine engine or turbojet engine 1 is provided at its aft end with a thrust deflector 2 comprising a plurality of curved panels. A thrust deflecting device of this character is accompanied by the aforedescribed problems, which are solved in the thrust increasing and deflecting device according to this invention.

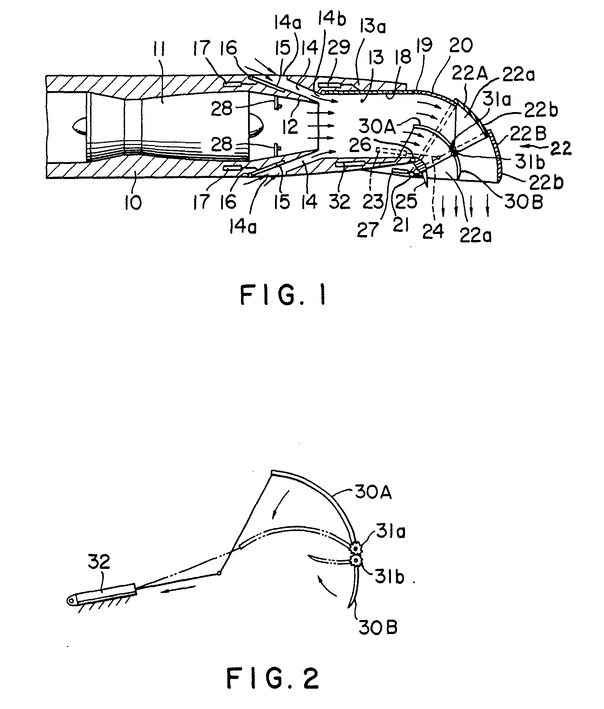

The thrust increasing and deflecting device of jet-propulsion engine for a V/STOL aircraft according to an embodiment of this invention is shown in its state for vertical takeoff and landing and in its state for forward or cruising flight in FIGS. 1 and 3 respectively.

Within an engine housing 10, a turbojet engine 11 is mounted. The gas flow path on the outlet side of this engine 11 is defined by a nozzle 12 the inner cross-sectional shape of which varies from a circle to a rectangle in the direction of the gas flow. Of course, the shape of the cross section of the flow path at the inlet and outlet of the nozzle 12 interior may be the same. To the rear of the outlet of this nozzle 12 and contiguously extending rearward therefrom is an exhaust passage 13. Secondary air induction passages 14, 14 are formed on the outer sides of the nozzle 12 and have respective inlet openings 14a, 14a open to the outside air and respective outlet openings 14b, 14b open to the exhaust passage 13 at and on the outer side of the outlet lip of the nozzle 12.

The inlet opening 14a of each secondary air induction passage 14 can be opened and closed by an inlet flap gate 15 hinged at one edge by a pivot hinge 16 by an actuator 17. The inlet flap gate 15 can thus be placed in its fully-opened position wherein it is in inlaid state in and flush with the outer side of the nozzle 12 and alternatively in its fully-closed position wherein it is closing the inlet opening 14a, flush with outer surface of the housing 10. The inlet flap gate 15 is fully opened for vertical takeoff and landing as shown in FIG. 1 and is fully closed for cruising flight as shown in FIG. 3. A hydraulic cylinder device or an air cylinder device is suitable for the actuator 17.

The above mentioned exhaust passage 13 has a substantially rectangular cross section and has an upper wall 13a with an inner ceiling liner 18.

Transversely along and to the rear edge of the ceiling liner 18, an intermediate duct 20 is hinge connected by a hinge 19. The forward edge of a deflector 22 is overlappingly fitted against the outer surface of the intermediate duct 20 along its rear edge when the device is in its downward deflecting state shown in FIG. 1. The deflector comprises mutually slidably fitted deflector elements 22A and 22B, each of which comprises an outer wall 22b and side walls 22a of integral construction. The side walls 22a, which are of sector shape, are pivotally supported by a transverse pivot shaft 21. The outer wall of the intermediate duct 20 and the outer walls 22b of the deflector elements 22A and 22B are of arcuate profile in longitudinal section.

The deflector elements 22A and 22B are thereby rotatable in pivotal movement about the pivot shaft 21 and are thus controllably rotated by the actuating rod 24 of an actuator 23 connected to element 22B. When the deflector 22 is thus rotated up and forward (counterclockwise as viewed in FIGS. 1 and 3), element 22B slides over element 22A and the outer wall 22b of element 22A rides over the intermediate duct 20 as shown in FIG. 3 indicating the non-deflecting state of the deflector for cruising flight. In this stage of the deflector the ceiling linear 18 and the intermediate duct 20 form an upper wall or ceiling of the exhaust passage 13 of convex character which, in longitudinal section, is of Vee shape with an obtuse angle, whereby the exhaust passage 13 is gradually constricted. At the same time, the deflector 22 is disposed above the intermediate duct 20 and the aft portion of the ceiling liner 18 and forms a smooth fairing for the rear portion of the device as well as the engine. The resultant direction of flow of the exhaust gas is substantially parallel to the engine longitudinal axis.

On the other hand, when the deflector 22 is rotated down and rearward (clockwise as viewed in FIGS. 1 and 3) to a deflecting state it forms, in cooperation with the intermediate duct 20, the side walls thereof, the bottom wall of the housing 10 at its rear extremity, and a deflecting flap 25, a smoothly downwardly deflecting flow passage as shown in FIG. 1. The deflecting flap 25 is pivotally supported along its forward edge by a transverse pivot shaft 26 at the rear edge of the bottom wall of the housing 10 and is actuated in rotation about the pivot shaft 26 by an actuator 27.

At the time of vertical takeoff or landing, the actuators 17, 17 are operated to fully open the inlet flap gates 15, 15 thereby to open the secondary air induction passages 14, 14 to the outside air, whereby secondary air is drawn in through these passages 14, 14. At the same time, the actuating rod 24 of the actuator 23 is extended to rotate the deflector 22 about the pivot shaft 21 to the angular position shown in FIG. 1. Also at the same time, the actuator 27 is operated to lower the deflecting flap 25 to an angular position approaching the vertically downward position.

When the thrust increasing and deflecting device is in this state, the jet flow discharged from the turbojet engine is accelerated as it flows through the nozzle 12, flows through the exhaust passage 13, and is deflected vertically downward by the deflector 22. At this time, the deflected flow path formed by the deflector 22 and the flap 25 is of a flat, substantially rectangular shape as viewed in the direction of curvature. For this reason, the exhaust gas loss is held to a minimum, and in addition the construction also becomes advantageously simple.

Since the static pressure within the exhaust gas passage 13 becomes lower than the outside atmospheric pressure, an ejector effect operates to induct outside air as secondary air through the secondary air induction passages 14, 14 into the exhaust gas passage 13. The jet flow from the turbojet engine 11 and the secondary air thus inducted are mixed within the exhaust gas passage 13, where transmission of momentum and cooling takes place. Since, in the device illustrated in FIG. 1, the cross-sectional shape of the outlet of the nozzle 12 is a flat rectangular, the area of contact of jet flow from the engine 11 and the secondary air is greater than that in the case of a circular cross section, whereby the mixing efficiency is high, and the ejector effect is great.

Since the momentum of the gas flow producing the jet thrust is increased by the introduction of the secondary air into the exhaust gas in this manner, a thrust which is greater than the jet thrust of the exhaust gas of the turbojet engine 11 by itself can be obtained. Furthermore, the exhaust gas from the engine 11 is cooled by the introduction of the secondary air and the mixing therewith, whereby overheating of the deflector 22 can be prevented. As a result, simplification or even elimination of heat-resistant materials and/or cooling means is afforded, which is a significant advantage in the reduction of weight of the aircraft. Furthermore, the lowering of the exhaust gas temperature is advantageous in that heat damage to the runway, the ground, the deck of a ship, and other surfaces at the point of takeoff or landing can be prevented.

Still another advantageous feature of the device is the provision of the deflecting flap 25, by which diffusion of the exhaust gas jet flow is prevented, and, further, lowering of the thrust deflection efficiency due to the formation of local vortices in the vicinity of the exhaust gas outlet can be prevented.

On the other hand, when the V/STOL aircraft is in its cruising state, the inlet flap gates 15, 15 are fully closed as shown in FIG. 3, and as mentioned hereinbefore, and the deflector 22 is in its most retracted position. When the deflector 22 is in this state, the ceiling liner 18 and the intermediate duct 20 form a Vee of obtuse angle as viewed in longitudinal side section, and the outer wall 22b has rotated around and atop this Vee. The exhaust gas passage 13 is then assuming a shape which is constricted toward its outlet. At the same time, the deflecting flap 25 is in a raised state of a suitable angular position.

An after-burner 28 is provided as a reheating device at an intermediate position in the nozzle 12 in the illustrated embodiment and operates to increase the energy of the exhaust gas and the thrust. Since it is necessary to enlarge the nozzle throat area for reheating, the ceiling liner 18 is adapted to be moved by an actuator 29 thereby to adjustably vary the nozzle throat area.

In order to minimize thrust loss when the deflector is in its deflecting state due to separation of the flow at the inner side of the deflected flow path, there is provided a guide vane device having guide vanes 30A and 30B which are movable between a first condition extending in and along a central zone of the flow path of the deflector when the deflector is in its deflecting state (FIG. 1) and a second, folded condition forming part of the undeflected flow path when the deflector is in its non-deflecting state (FIG. 3). In its first condition the vanes 30A and 30B of the guide vane device prevent separation of the flow at the inner side of the deflected flow path and improve the conformity of the exhaust gas deflection angle with respect to the deflector angle. The guide vanes 30A and 30B are positioned in tandem when in the first condition and in this condition have a continuous uniform curvature parallel to the curved flow path defined by the deflector 22 when in its deflecting state.

The guide vanes 30A, 30B are synchronously coupled for rotation about respective axes by intermeshing gears 31a and 31b. As best shown in FIG. 2 the two curved guide vanes of the illustrated device are pivotally connected at respective pivot points by means of the intermeshing gears 31a and 31b, and an actuator 32 which is connected to the guide vane 30A which is the upstream vane when the vanes are in the first condition (full line in FIG. 2) is provided for moving the vanes from the first condition to the second, folded condition (chain-dotted line in FIG. 2). In this second, folded condition of the guide vane device the vanes 30A and 30B are neatly folded one over the other and define part of the undeflected flow path when the deflector is in its non-deflecting state. More specifically, as shown in FIG. 3, a nozzle throat of the undeflected flow path is formed between the convex surface of the guide vanes 30A and the combination of the ceiling liner 18 and the intermediate duct 20. In the folding action of the guide vanes, the lower guide vane 30B is pivotal forward and upward in synchronism with the forward and downward pivoting of the guide vane 30A effected by the actuator 32.

The thrust increasing effect of the illustrated thrust increasing and deflecting device with and without guide vanes 30A and 30B is indicated in Fig. 4. As is apparent from this graph, a thrust increasing effect of a maximum of approximately 10 percent can be expected without the guide vanes, and by providing guide vanes to minimize thrust loss due to separation of flow in the deflected flow path, a thrust increase greater than 10 percent is possible.

From the foregoing disclosure it will be seen that, because secondary air is inducted from the outside atmosphere into the exhaust gas passage 13 by an ejector effect at the time of takeoff or landing, the jet flow, and therefore the thrust, can be increased. Furthermore, as a result of the mixing of the outside air of relatively low temperature thus inducted and the jet flow exhausted from the turbojet engine, the temperature of the jet flow is lowered, whereby the heat-withstanding measure for the deflector is facilitated. In addition, by installing guide vanes within the deflecting passage of the deflector, separation of the jet flow can be prevented thereby to minimize thrust loss.

**Claims**

1. A jet-propulsion engine for a vertical/short takeoff and landing (V/STOL) aircraft, said engine (11) having an exhaust gas passage (13), and, combined therewith, a thrust increasing and deflecting device comprising:

structures (10, 12) for forming secondary air induction passage means (14, 14) for communicatively connecting the outside atmosphere to the upstream end of said exhaust gas passage (13) thereby to induct outside air as secondary air, by ejector action of said exhaust gas (13), into said exhaust gas passage to be mixed with said exhaust gas;

flap gates (15, 15) operable to selectively close and open said air induction passage means (14, 14); and

a deflector (22) provided at the outlet part of said exhaust gas passage (13) and defining therein a flow path, said deflector being changeable in state between a non-deflecting state and a deflecting state to selectively vary the final direction of discharge of the exhaust gas, respectively, between an undeflected direction substantially parallel to the engine axis for forward flight and a deflected direction substantially perpendicularly downward relative to said engine axis for V/STOL takeoff or landing:

characterised by said flap gates being provided at the inlet ends of said air induction passage means and by a guide vane device (30A, 30B) having guide vanes which are movable between (i) a first condition extending in and along a central zone of the flow path defined by the deflector, when the deflector is in said deflecting state, for preventing separation of flow at the inner side of the deflected flow path, and (ii) a second, folded condition forming a part of the flow path when the deflector is in said non-deflecting state.

2. An engine according to claim 1, wherein said guide vane device comprises guide vanes (30A, 30B) synchronously coupled for rotation about respective axes by intermeshing gears (31a, 31b).

3. An engine according to claim 2, wherein said deflector defines a curved flow path when in said deflecting state and wherein said guide vanes (30A, 30B) are positioned in tandem relative to each other when in said first condition and have a continuous uniform curvature parallel to said curved flow path when in said first condition.

4. An engine according to claim 3, wherein said guide vane device comprises two guide vanes (30A, 30B) which are curved and pivotally connected at respective adjacent pivot points by means of said intermeshing gears (31a, 31b).

5. An engine according to claim 4, wherein said two guide vanes (30A, 30B) are folded one over the other in said second, folded condition and define a part of the undeflected flow path when the deflector is in said nondeflecting state.

6. An engine according to claim 4 or 5, wherein actuator means (32) for the guide vanes is connected to the guide vane (30A) which is the upstream vane when the guide vanes are in said first condition.

7. An engine according to any one of the preceding claims, wherein said exhaust passage has a substantially rectangular cross-section and said secondary air induction passage means comprises respective passages (14) each of which is provided at its inlet end with a respective said inlet flap gate (15).

8. An aircraft provided with an engine according to any of the preceding claims.

**Patentansprüche**

1. Strahlverstärker und -umlenker für den Strahlmotor (11) eines Kurz- oder Senkrechtstartflugzeugs mit einem Abgasauslaßkanal (13), mit Anordnungen (10, 12) zur Bildung von Sekundärluft-Einlaßkanälen (14, 14) für die Verbindung der Außenatmosphäre mit dem stromaufseitigen Ende des Abgasauslaßkanals (13), um durch die Saugwirkung des Abgases (13) Außenluft als Sekundärluft einzuführen und mit dem Abgas zu mischen, mit Klappeneinlässen (15, 15) zum wahlweisen Schließen und Öffnen der Sekundärluft-Einlaßkanäle (14, 14) und mit einem Umlenker (22), der am Auslaßteil des Abgasauslaßkanals (13) angeordnet ist und in diesem einen Strömungsweg bildet, wobei die Lage des Umlenkers zwischen einer nicht-umlenkenden Lage und einer umlenkenden Lage änderbar ist, um wahlweise die endgültige Auslaßrichtung des Abgases zwischen einer nicht-umgelenkten Richtung im wesentlichen parallel zur Motorachse für den Vorwärtsflug und einer umgelenkten Richtung im wesentlichen senkrecht nach abwärts in Bezug auf die Motorachse für den Kurz- oder Senkrechtstart oder die Kurz- oder Senkrechtlandung zu verändern, dadurch gekennzeichnet, daß die Klappeneinlässe an den Einlaßenden der Sekundärluft-Einlaßkanäle vorgesehen sind und daß eine Leitschaufelvorrichtung (30A, 30B) mit Leitschaufeln vorgesehen ist, die bewegbar ist zwischen

(i) einer ersten Lage, in welcher sie sich in und entlang einer zentralen Zone des durch den Umlenker begrenzten Strömungsweges erstreckt, wenn sich der Umlenker in seiner umlenkenden Lage befindet, um eine Trennung der Strömung an der Innenseite des umgelenkten Strömungsweges zu verhindern, und

(ii) einer zweiten umgelenkten Lage, in welcher sie einen Teil des Strömungsweges bildet, wenn der Umlenker sich in der nicht-umlenkenden Lage befindet.

2. Motor nach Anspruch 1, bei welchem die Leitschaufelvorrichtung Leitschaufeln (30A, 30B) enthält, die für eine Drehung um die jeweiligen Achsen durch ineinandergreifende Zahnräder (31a, 31b) synchron miteinander gekuppelt sind.

3. Motor nach Anspruch 1, bei welchem der Umlenker einen gekrümmten Strömungsweg begrenzt, wenn er sich in seiner umlenkrenden Lage befindet, und bei welchem die Leitschaufeln (30A, 30B) hintereinander angeordnet sind, wenn sie sich in der ersten Lage befinden, und eine fortlaufend stetige Krümmung parallel zum gekrümmten Strömungsweg aufweisen, wenn sie sich in dieser ersten Lage befinden.

4. Motor nach Anspruch 3, bei welchem die Leitschaufelvorrichtung zwei Leitschaufeln (30A, 30B) enthält, die gekrümmt sind und die mittels der ineinandergreifenden Zahnräder (31a, 31b) an jeweils benachbarten Schwenkpunkten miteinander verbunden sind.

5. Motor nach Anspruch 4, bei welchem die beiden Leitschaufeln (30A, 30B) in der zweiten umgelenkten Lage übereinandergelegt sind und einen Teil des nicht-umgelenkten Strömungsweges begrenzen, wenn sich der Umlenker in dieser nicht-umgelenkten Lage befindet.

6. Motor nach Anspruch 4 oder 5, bei welchem eine Betätigungsvorrichtung (32) für die Leitschaufeln mit der Leitschaufel (30A) verbunden ist, welche die stromaufwärts befindliche Leitschaufel ist, wenn sich die Leitschaufeln in ihrer ersten Lage befinden.

7. Motor nach einem der vorhergehenden Ansprüche, bei welchem der Auslaßkanal einen im wesentlichen rechteckigen Querschnitt besitzt und bei welchem die Sekundärluft-Einlaßkanäle jeweils Kanäle (14) aufweisen, von denen jeder an seinem Einlaß mit einem besonderen Klappeneinlaß versehen ist.

8. Luftfahrzeug, das mit einem Motor nach einem der vorhergehenden Ansprüche versehen ist.

**Revendications**

1. Moteur à réaction pour un avion à décollage et atterrissage vertical/court (V/STOL), ledit moteur (11) comportant un passage de gaz d'échappement (13) et, en combinaison avec celui-ci, un dispositif d'augmentation et de déviation de poussée comprenant:

— des structures (10, 12) pour former un ensemble de passages d'admission d'air secondaire (14, 14) pour établir une communication entre l'atmosphère extérieure et l'extrémité d'amont dudit passage de gaz d'échappement (13) en vue d'admettre de l'air extérieur comme air secondaire, par une action d'éjection desdits gaz d'échappement (13), dans ledit passage de gaz d'échappement en vue de leur mélange avec lesdits gaz d'échappement;

— des volets (15, 15) manoeuvrables pour fermer et ouvrir sélectivement ledit ensemble de passages d'admission d'air (14, 14); et

— un déflecteur (22) placé dans la partie de sortie dudit passage de gaz d'échappement (13) et définissant dans celui-ci un trajet d'écoulement, ledit déflecteur pouvant changer d'état entre un état non déflecteur et un état déflecteur de manière à faire varier sélectivement la direction finale de décharge des gaz d'échappement respectivement entre une direction non déviée et sensiblement parallèle à l'axe du moteur en vue d'un vol vers l'avant et une direction déviée et orientée sensiblement perpendiculairement vers le bas par rapport audit axe du moteur en vue d'un décollage ou atterrissage vertical/court (V/STOL):

— caractérisé par le fait que lesdits volets sont placés aux extrémités intérieures dudit ensemble de passages d'admission d'air et en ce qu'il est prévu un dispositif à aubes de guidage (30A, 30B) comportant des aubes de guidage qui sont déplaçables entre (i) une première condition où elles s'étendent dans et le long d'une zone centrale du trajet d'écoulement défini par le déflecteur, quand le déflecteur se trouve dans ledit état déflecteur, afin d'empêcher une séparation d'écoulement sur le côté intérieur du trajet d'écoulement dévié, et (ii) une seconde condition pliée formant une partie du trajet d'écoulement quand le déflecteur se trouve dans ledit état non déflecteur.

2. Un moteur selon la revendication 1, dans lequel ledit dispositif à aubes de guidage comprend des aubes de guidage (30A, 30B) accouplées de façon synchrone pour tourner autour d'axes respectifs au moyen d'engrenages mutuellement en prise (31a, 31b).

3. Un moteur selon la revendication 2, dans lequel ledit déflecteur définit un trajet d'écoulement incurvé quand il se trouve dans ledit état déflecteur et dans lequel lesdites aubes de guidage (30A, 30B) sont positionnées en tandem l'une par rapport à l'autre quand elles se trouvent dans ladite première condition et ont une courbure uniforme continue parallèle audit trajet d'écoulement incurvée quand elles se trouvent dans ladite première condition.

4. Un moteur selon la revendication 3, dans lequel ledit dispositif à aubes de guidage comprend deux aubes de guidage (30A, 30B) qui sont incurvées et reliées de façon pivotante en des points de pivotement adjacents respectifs au moyen desdits engrenages mutuellement en prise (31a, 31b).

5. Un moteur selon la revendication 4, dans lequel les deux aubes de guidage précitées (30A, 30B) sont pliées l'une au-dessus de l'autre dans ladite seconde condition pliée et définissent une partie du trajet d'écoulement non dévié quand le déflecteur se trouve dans ledit état non déflecteur.

6. Un moteur selon la revendication 4 ou 5, dans lequel un moyen d'actionnement (32) pour les aubes de guidage est relié à l'aube de guidage (30A) qui est l'aube d'amont quand les aubres de guidage se trouvent dans ladite première condition.

7. Un moteur selon une quelconque des revendications précédentes, dans lequel ledit passage d'échappement a une section droite sensiblement rectangulaire et ledit ensemble de passages d'admission d'air secondaire comprend des passages respectifs (14) qui sont chacun pourvus à leur extrémité d'entrée d'un volet d'entrée respectif (15).

8. Un avion équipé d'un moteur selon une quelconque des revendications précédentes.

FIG. 1

FIG. 2

# FIG. 3

# FIG. 4

WITH GUIDE VANES

WITHOUT GUIDE VANES

THRUST INCREASE RATIO

PRESSURE SUPPLIED BY SIMULATED ENGINE

kg / cm²

# FIG. 5